Europäisches Patentamt

(19) European Patent Office

Office européen des brevets

(11) Publication number: **0 279 794 B1**

(12) **EUROPEAN PATENT SPECIFICATION**

(45) Date of publication of patent specification :
04.12.91 Bulletin 91/49

(21) Application number : **88850019.6**

(22) Date of filing : **20.01.88**

(51) Int. Cl.⁵ : **B65G 15/34,** B29D 29/06

(54) Conveyor belt of reinforced elastomeric material.

(30) Priority : **22.01.87 SE 8700247**

(43) Date of publication of application :
**24.08.88 Bulletin 88/34**

(45) Publication of the grant of the patent :
**04.12.91 Bulletin 91/49**

(84) Designated Contracting States :
**DE FR GB IT SE**

(56) References cited :
**FR-A- 2 268 627**
**GB-A- 925 082**
**GB-A- 991 767**
**GB-A- 1 443 634**

(73) Proprietor : **TRELLEX AKTIEBOLAG**
**Nygatan 102**
**S-231 45 Trelleborg (SE)**

(72) Inventor : **Boman, Ulf Lennart**
**Västergatan 3 B**
**S-231 00 Trelleborg (SE)**

(74) Representative : **Wallin, Bo-Göran et al**
**AWAPATENT AB Box 5117**
**S-200 71 Malmö (SE)**

## Description

The present invention relates to a conveyor belt of reinforced elastomeric material.

Conveyor belts of reinforce elastomeric material conventionally comprise a carcass containing reinforcing plies or layers and surrounded by top and bottom covers. In prior art conveyor belts, the carcass is made up of a varying number of rubber-coated reinforcing plies which serve to impart to the belt the stability required to enable the belt to take up the load and the stresses which occur during operation. Elastomeric top and bottom covers provided on the upper and lower sides of the carcass protect the carcass against wear, chemical attack, the action of heat etc.

The properties of the finished belt very much depend on the structure of the carcass, its fibre, yarn and other textile properties, and also on the manner in which the reinforcement has been treated, such as priming and hot-stretching (fixing).

The properties required of a conveyor belt are tensile, flexural and impact strength, flexibility (flexural resistance) and stability (modulus and plastic deformation) in the longitudinal direction of the belt. Furthermore, the belt is required to have tear and impact strength as well as troughing ability in the transverse direction of the belt.

To attain these properties, use is generally made of textile fabrics as fabric inserts in the carcass. Occasionally, the carcass also comprises a steel reinforcement. The warps of the fabric inserts primarily serve to satisfy the requirements placed on tensile, flexural and impact strength, flexibility and stability in the longitudinal direction of the fabric, while the weft in the transverse direction of the fabric determines the tear and impact strength and the troughing ability of the belt.

A conveyor belt must also have a certain strength, for which reason the strength of the reinforcing material constitutes the primary property. However, the tensile strength which is the property most frequently announced in conveyor belt specifications, often is overrated in relation to other factors, such as suppleness, stability and impact strength.

The elasticity of the carcass material or the reinforcing material is of the utmost importance to the finished conveyor belt. Even if one selects a stronger material, one does not always obtain a product that has sufficient stability in time, i.e. the material may become fatigued or rupture after it has been used over a longer or shorter period of time.

As mentioned above, fabric inserts have generally been used as constituents in the carcass. The present invention, however, is based on the insight that essential advantages both in respect of the service and strength characteristics of the conveyor belt and in respect of the splicing technique for the conveyor belt are obtainable, if a special type of reinforcement is used as a constituent in the carcass. The invention is defined in claim 1. The carcass therefore comprises at least one reinforcing layer which is a knitted structure and has binding threads in the form of a warp knit with inserted warp threads. Optionally, the warp knit may also comprise weft threads, the warp and the weft threads lying each in one layer and crossing each other. In both cases the reinforcing layer is laid with its warp threads in the longitudinal direction of the conveyor belt.

This concept of the invention makes for a far better utilisation of the strength properties of the warp and weft threads included, which means that basically it is possible to reduce the amount of fibre material, while retaining the desired strength properties. The reason for the improvement is that the warp and weft threads are not interwoven, i.e. passed up over and underneath one another in the same manner as in a conventional fabric, but lie instead each in one plane. Since the warp threads thus do not extend in an undulatory manner, as in a woven fabric, the extensibility of the reinforcing layer in the longitudinal direction of the conveyor belt will be lower in the present invention. The reinforcing material is held together by means of the binding threads in the form of warp knits. The warp knit layer may thus be formed of thin binding threads which, together with any inserted weft threads, mainly serve to hold the reinforcing layer together during manufacture of the conveyor belt. From the viewpoint of strength, these binding threads are of secondary importance.

Because the warp threads lie essentially in one plane or layer and are held together by means of a warp knit, it is also possible to vary considerably the properties of the reinforcing layer in respect of strength etc. in the longitudinal direction of the conveyor belt. If use is made of weft thread inserts, which is preferred, it is possible to attain corresponding variations in respect of the strength etc. in the transverse direction of the belt. Thus, use may be made of thick or coarse warp threads which are sparsely laid, for example by being inserted between every second or every third or even every fourth wale in the warp knit structure. In the same manner, it is possible to vary the number of weft threads, i.e. the threads inserted in and extending between the adjacent loops in the courses of loops in the warp knit. Thus, also these weft threads can be made thinner or thicker, all according to the properties required of the finished conveyor belt. The closeness is varied by inserting the weft threads in each course of loop or in every second or every third course of loops etc., all according to requirements. Furthermore, warp or weft threads of different thickness can be used in one and the same conveyor belt, for example a coarse warp or weft thread followed by three thinner threads. A further advantage is the wider scope of selection regarding the material for the warp threads and the weft threads, if any, which merely are to be held in position by the knitted structure.

A major advantage of the conveyor belt according to the invention is that, by selecting a suitable material and a suitable structure for the said reinforcing layer, one need not have more than one reinforcing layer in the carcass, and this layer should be placed in the neutral zone of the conveyor belt to ensure that it is exposed to a minimum of flexural stress and unnecessary tensile stress at the pulleys.

A further major advantage of the conveyor belt according to the present invention is the splicing technique which can be used. In conventional splicing of conveyor belts having top and bottom covers and an intermediate carcass, splicing is effected by stripping the top cover on one side of the region of the future splice and then stripping the bottom cover on the other side of the region of the splice. After that, overlap splicing is carried out and the covers are completed, whereupon vulcanisation is effected. In a conveyor belt according to the present invention the top and bottom covers within the region of the future splice also are stripped but when splicing is carried out, the warp threads are interlapped such that they will lie in essentially the same plane within the region of the splice. The best result is obtained if the reinforcing layer is completely exposed within the region of the splice, whereupon entirely new covers are applied to the region of the splice, and the free ends of the warp threads in the reinforcing layer are interlapped such that they will all lie in essentially the same plane and in the neutral zone of the conveyor belt, whereby the splice will obtain adequate flexibility. When splicing conventional conveyor belt with woven fabric inserts, the fabric layers within the region of the splice are doubled, and the overlapping reinforcing layers within the region of the splice are moved away from the neutral zone of the conveyor belt. Since the conveyor belt during operation is bent over the pulleys at the belt ends, the region of the splice may easily be damaged when overlap splicing of conventional fabric reinforcement has been carried out. In splicing a conveyor belt in accordance with the present invention, the tendency toward separation within the region of the splice will be less because the individual warp thread layers of the carcass lie in essentially the same plane and, in the neutral zone, also within the region of the splice.

The invention will now be described in greater detail, reference being made to the accompanying drawings. Fig. 1 illustrates schematically the construction of an example of a conveyor belt according to the invention. Fig. 2 illustrates the splicing of such a conveyor belt. Fig. 3 illustrates schematically an embodiment of a reinforcing layer included in the conveyor belt according to the invention.

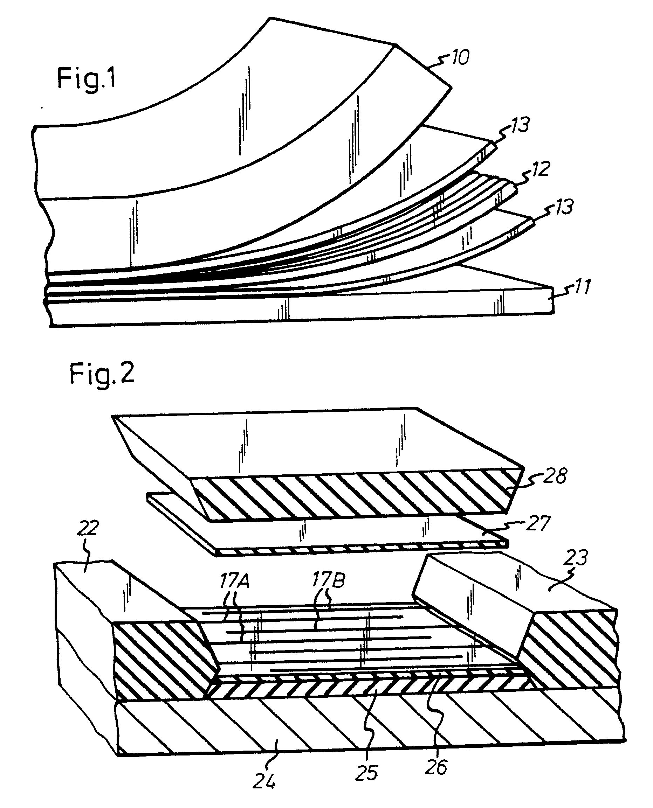

Fig. 1 illustrates the general construction of a conveyor belt according to the invention. The belt comprises top and bottom covers 10 and 11, respectively, enclosing a reinforcing layer 12 which preferably is located in the neutral zone of the conveyor belt. Between the covers and the reinforcing layer or layers 12, cushion rubber layers 13 are provided to improve the adhesion between the covers and the reinforcing layers. The reinforcing layer may have a rubber coating forming the cushion rubber layers.

According to the invention, the carcass, i.e. the reinforcing layer 12, is made up of at least one reinforcing layer having binding threads 15, 16 in the form of a warp knit in which warp threads 17 have been inserted and, in the embodiment illustrated, also weft threads 18, 19, the warp and weft threads lying each in one layer and crossing one another. The reinforcing layer is then placed with its warp threads 17 in the longitudinal direction of the conveyor belt.

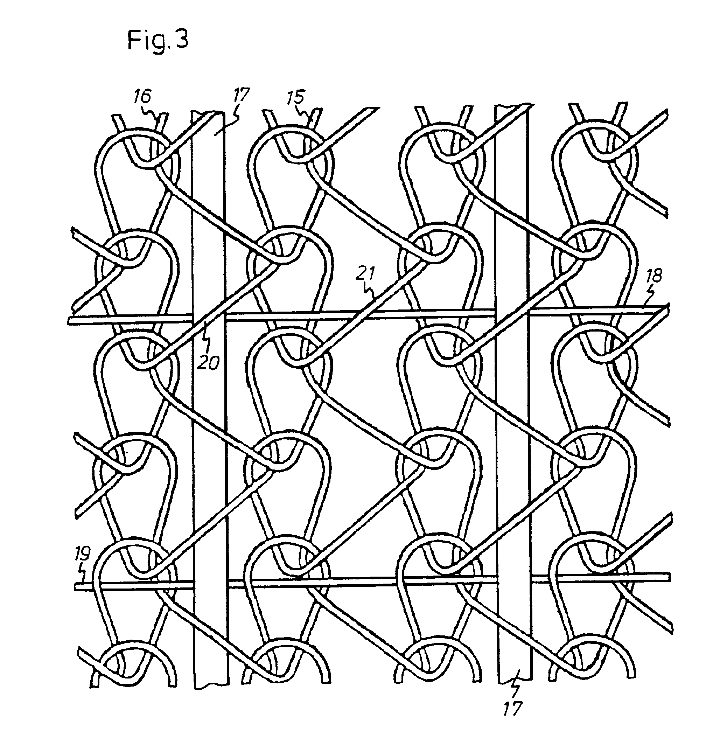

As will appear from Fig. 3, the reinforcing layer is a warp knit made up of several parallel thread systems, i.e. warps. Each needle handles at least one thread 15, 16 of its own. The loops are all formed at the same time and mainly in the longitudinal direction of the knitted structure. In order to interconnect the different wales, the thread guide is moved laterally such that one and the same thread in the desired sequence will form loops on two or more adjacent needles. In the embodiment illustrated in Fig. 3, each individual thread 15, 16 forms loops on two adjacent needles, and each thread thus extends in two wale rows. Also other types of warp knit may be used, for example such types where each thread extends between two or three juxtaposed wale rows. In the embodiment illustrated, warp threads 17 have been placed between every second juxtaposed wale row, and across these warp threads the cross connections between the wale rows extend. In this embodiment, also weft threads 18, 19 have been placed in the knit binding to hold the warp threads 17. In the embodiment illustrated, this is the case between every third course of loops in the longitudinal direction of the wales. The weft thread 18 has been laid across all juxtaposed loops of the adjacent wales, although underneath both the warp thread 17 and the transverse portions 20, 21 of the binding threads 15, 16. Binding of the weft thread 19 is effected in a different manner, whereby the weft thread is more firmly locked in the longitudinal direction of the knitted structure. In this case, the weft thread thus has been taken through each loop in all juxtaposed loops in a course of loops and also underneath the warp threads 17. In this manner, both the warp threads and the weft threads are firmly fixed in position relative to the binding thread system forming the knitted structure.

The knitting technique utilised for the manufacture of the reinforcing layer is well known and can be varied to a large extent according to the requirements placed on the reinforcing layer of the conveyor belt. Thus, the warp threads 17 can be placed closer or more sparsely, or be formed of a reinforcing material other than the remainder of the reinforcing layer, for example Aramid fibres. At the same time, it is possible to vary to the same wide extent the material and the position of the weft threads 18. There may be occasions when only thin weft threads are desired. If, however, one wishes to improve the transverse rigidity of the belt, thicker weft threads or alternatingly thick and thin weft threads may be utilised, and this applies also to the warp threads 17. On the other hand, the binding threads 15, 16 in the knitted structure should be thin since their main purpose is to hold the reinforcing layer together.

Fig. 2 illustrates a method of splicing a conveyor belt according to the present invention. At the two ends of the conveyor belt which are to be interconnected, the top and bottom covers and also the cushion rubber layers 13 have been removed to completely expose the fabric insert. As will appear from Fig. 2, the two belt ends 22, 23 have been placed on a base 24, and a complementary bottom cover 25 and a complementary cushion rubber layer 26 have been placed on the base 24 within the region of the splice. On top of the cushion rubber layer 26, the exposed warp threads 17A, 17B have been interlapped in essentially one and the same plane so that these warp threads will lie approximately in the neutral zone of the conveyor belt. If necessary, it is also possible to insert transverse reinforcements (not shown) to replace or complete the warp threads 18, 19 within the region of the splice. However, such transverse reinforcements are not shown in Fig. 2. After the warp threads 17A and 17B have been oriented in the above manner, they are covered by a cushion rubber layer 27 followed by a top cover 28 to complete the conveyor belt within the region of the splice. Finally, the splice is vulcanised.

Another possibility of making the splice, although not as good as the embodiment described above, is to strip, within the region of the splice, the top cover on one side of the splice and to strip the bottom cover on the other side of the splice to expose the warp threads in the reinforcing layer, whereupon overlap splicing is carried out by bringing the exposed belt portions on both sides of the splice together in a manner such that the warp threads within the stripped belt portions will be interlapping.

The elastomeric material for the conveyor belt may consist of conventional natural or synthetic rubber mixtures or other elastomeric materials whose properties make them useful for the contemplated use of the conveyor belt. Similarly, suitable materials can be selected for the different parts of the reinforcement, i.e. the warp and weft threads and the binding threads. Different materials may be used for the different threads of one and the same conveyor belt.

One possibility of increasing the adhesion between the elastomeric material and the inserted warp threads is to subject the threads to a matting treatment, especially if the threads are Aramid fibres.

## Claims

1. A conveyor belt of reinforced elastomeric material, comprising top and bottom covers (10, 11) and, between these covers, a carcass (12), **characterised** in that said carcass (12) comprises at least one reinforcing layer (12) having binding threads (15, 16) in the form of a warp knit in which warp threads (17) have been inserted, and that said reinforcing layer (12) has been placed with its warp threads (17) in the longitudinal direction of the conveyor belt.

2. A conveyor belt as claimed in claim 1, **characterised** in that the warp knit (15, 16) also has inserted weft threads (18, 19), and that the warp and weft threads (17 ; 18, 19) lie each in one layer and cross one another.

3. A conveyor belt as claimed in claim 1 or 2, **characterised** in that the warp threads (17) have been inserted in a selected distribution between the wales of the warp knit, preferably between every second wale.

4. A conveyor as claimed in claim 1, 2 or 3, **characterised** in that the weft threads (18, 19) have been inserted with a selected distribution in the courses of the warp knit, preferably every third course.

5. A conveyor as claimed in any one of claims 1-4, **characterised** in that the carcass (12) has been formed of a single reinforcing layer.

## Patentansprüche

1. Förderband aus verstärktem Elastomermaterial, umfassend obere und untere Deckplatten (10, 11) und eine sich zwischen diesen erstreckende Karkasse (12), dadurch **gekennzeichnet**, dass die Karkasse (12) zumindest eine Verstärkungsschicht (12) mit Bindefäden (15, 16) in Form eines Kettengewirkes mit eingelegten Kettfäden (17) umfasst, und dass die Verstärkungsschicht (12) mit ihren Kettfäden (17) in Längsrichtung des Förderbandes angebracht ist.

2. Förderband nach Anspruch 1, dadurch **gekennzeichnet**, dass das Kettengewirke (15, 16) auch eingelegte Einschlagfäden (18, 19) hat, und dass die Kett- und Einschlagfäden (17 ; 18, 19) in je einer Schicht liegen und einander kreuzen.

3. Förderband nach Anspruch 1 oder 2, dadurch **gekennzeichnet**, dass die Kettfäden (17) mit gewählter Verteilung zwischen den Maschenstäbchen des Kettengewirkes, vorzugsweise zwischen jedem zweiten Maschenstäbchen, eingelegt sind.

4. Förderband nach Anspruch 1, 2 oder 3, dadurch **gekennzeichnet**, dass die Einschlagfäden (18, 19) mit gewählter Verteilung in den Maschenreihen des Kettengewirkes, vorzugsweise in jeder dritten Maschenreihe, eingelegt sind.

5. Förderband nach einem der Ansprüche 1-4, dadurch **gekennzeichnet**, dass die Karkasse (12) von einer einzigen Verstärkungsschicht gebildet ist.

## Revendications

1. Courroie transporteuse d'un matériau élastomère armé, comprenant des revêtements supérieur et inférieur (10, 11), et, entre ces revêtements, une carcasse (12), caractérisée en ce que la carcasse (12) comprend au moins une couche d'armature (12) ayant des fils de liaison (15, 16) sous forme d'un tricot à mailles jetées dans lequel des fils de chaîne (17) ont été insérés, et en ce que la couche d'armature (12) a été placée avec ses fils de chaîne (17) dans la direction longitudinale de la courroie transporteuse.

2. Courroie transporteuse selon la revendication 1, caractérisée en ce que le tricot à mailles jetées (15, 16) a aussi des fils de trame insérés (18, 19), et en ce que les fils de chaîne et de trame (17 ; 18, 19) se trouvent chacun dans une couche et se recoupent.

3. Courroie transporteuse selon la revendication 1 ou 2, caractérisée en ce que les fils de chaîne (17) ont été insérés avec une distribution choisie entre les colonnes du tissu à mailles jetées, de préférence entre une colonne sur deux.

4. Courroie transporteuse selon la revendication 1, 2 ou 3, caractérisée en ce que les fils de trame (18, 19) ont été insérés avec une distribution choisie dans les rangées du tricot à mailles jetées, de préférence dans une rangée sur trois.

5. Transporteur selon l'une quelconque des revendications 1 à 4, caractérisé en ce que la carcasse (12) a été formée d'une seule couche d'armature.

Fig.1

Fig.2

Fig. 3